# DEMANDE DE BREVET EUROPEEN

(11) **EP 0 806 602 A1**
(43) Date de publication de la demande: **12.11.1997**
(21) Numéro de dépôt: 97400915.1
(22) Date de dépôt: 23.04.1997
(51) Int. Cl.: F16N 11/04

(54) **Dispositif de lubrification automatique**

(30) Priorité: 06.05.1996 FR 9605611
(71) Demandeur: CONSORTIUM DE RECHERCHES POUR L'APPLICATION DES FLUIDES, CRAF, F-49650 Brain sur Allonnes (FR)
(72) Inventeur: Javelly, Christian, 49650 Allonnes (FR); Malbrunot, Guy, 49700 Les Ulmes (FR)
(74) Mandataire: Casalonga, Axel

(57) **Abrégé**

Dispositif de lubrification automatique comprenant une embase 1 traversée par un conduit d'écoulement du lubrifiant, capable de recevoir un couvercle 2 creux formant un cylindre dans lequel sont logés une cartouche 5 de lubrifiant et un piston 4 mobile sous l'action d'un ressort 3. Le ressort 3 est disposé entre le piston 4 et l'embase 1 pour repousser le piston 4 vers le couvercle 2 et la cartouche 5 de lubrifiant est disposée entre le piston 4 et le couvercle 2 de façon à être écrasée progressivement par le piston.

## Description

La présente invention concerne le domaine des dispositifs de lubrification automatiques destinés à être montés à la place d'un graisseur manuel en un point nécessitant un complément régulier de lubrifiant, et ne pouvant être aisément raccordés à un système de lubrification centralisé.

Ce type d'appareil est particulièrement utilisé sur des équipements industriels dans lesquels les accès de maintenance sont difficiles en raison du fonctionnement permanent de l'équipement ou de l'environnement. Il permet de supprimer les appoints manuels à la pompe à main dont les débits et les fréquences sont généralement mal maîtrisés.

On connaît des distributeurs de graisse automatiques comprenant un micro-moteur alimenté par piles et actionnant, soit une micro-pompe à piston, soit un réducteur et un système vis-écrou transformant le mouvement de rotation du moteur en un mouvement de translation d'un piston au contact de la réserve de graisse. Néanmoins, la complexité des organes mécaniques mis en oeuvre en font des appareils volumineux et peu adaptés aux conditions d'environnement auxquelles ils sont destinés. Ces appareils nécessitent un contrôle permanent de l'état de la source d'énergie.

On connaît également des distributeurs de graisse automatiques fonctionnant par une réaction chimique qui génère une pression dans une enceinte déformable qui poussera le lubrifiant. Mais la maîtrise dans le temps de la réaction thermo-chimique est délicate et augmente l'imprécision sur la durée nécessaire à la distribution de la réserve de lubrifiant. De plus, il faut procéder au remplacement complet de l'appareil après utilisation de la réserve de lubrifiant.

On connaît encore des distributeurs de graisse automatiques où l'éjection de la graisse est assurée par la tension d'un ressort agissant sur un piston au contact de la réserve de graisse. La graisse sort par un orifice dont la section évolue en fonction de la détente du ressort. Le temps d'éjection peut être modifié par l'utilisation de ressorts de raideurs différentes. Cependant, pour obtenir un débit constant, la correction de la variation de pression exercée par le ressort, s'effectue en modifiant les pertes de charge à travers l'orifice. Or, cette correction est tributaire de la viscosité du lubrifiant et n'est pas une fonction linéaire. Le débit de graisse n'est donc pas déterminé de façon précise.

L'invention a pour objet de remédier aux inconvénients précités en proposant un distributeur de graisse automatique à tension de ressort, dont le débit est réglable en fonction de la viscosité du lubrifiant et dont la recharge de la réserve de graisse soit aisée à effectuer et à vérifier.

L'invention a également pour objet un distributeur de graisse automatique avec des cartouches de graisse jetables, dont la raideur compense au moins partiellement la variation de tension du ressort pendant son déplacement.

Le dispositif de lubrification automatique, selon l'invention, comprend une embase traversée par un conduit d'écoulement du lubrifiant, capable de recevoir un couvercle creux formant un cylindre dans lequel sont logés une cartouche de lubrifiant et un piston mobile sous l'action d'un ressort. Le ressort est disposé entre le piston et l'embase pour repousser le piston vers le couvercle, la cartouche de lubrifiant étant disposée entre le piston et le couvercle de façon à être écrasée progressivement par le piston. On obtient ainsi un dispositif de lubrification qui se recharge par remplacement de la cartouche de lubrifiant, le remplacement pouvant aisément être prévu par un contrôle effectué sur l'écrasement de la cartouche.

Dans un mode de réalisation de l'invention, le piston comprend une tête, une tige-guide faisant saillie dans le conduit de l'embase, et un conduit traversant la tête et la tige-guide de façon que le lubrifiant provenant de la cartouche s'écoule vers le conduit de l'embase.

De préférence, le dispositif comprend un moyen de réglage de l'écoulement du fluide solidaire de l'extrémité inférieure de la tige-guide du piston. Le conduit de l'embase peut recevoir une pièce de réglage de l'écoulement munie d'un trou mettant en communication le conduit du piston et le conduit de l'embase et dont le diamètre définit la vitesse d'écoulement du lubrifiant. Un opérateur peut ainsi choisir une pièce de réglage dont le diamètre du trou est adapté au débit de lubrifiant souhaité.

Dans un mode de réalisation de l'invention, l'embase comprend un corps recevant le couvercle et le ressort et à travers lequel coulisse la tige-guide du piston, et une pièce d'adaptation fixée sous le corps, dans laquelle est disposé le moyen de réglage de l'écoulement et qui est capable de s'adapter à un organe mécanique auquel le lubrifiant est destiné.

La cartouche de lubrifiant, selon l'invention, est destinée à être disposée dans un dispositif de lubrification automatique du type comprenant une embase traversée par un conduit d'écoulement du lubrifiant et capable de recevoir un couvercle creux formant un cylindre dans lequel est logé un piston mobile sous l'action d'un ressort. La cartouche comprend un contenant de forme cylindrique avec des parois réalisées en matériau synthétique. La paroi circulaire du cylindre est annelée de façon à faciliter l'écrasement de la cartouche.

Dans un mode de réalisation de l'invention, chaque anneau formé sur la paroi circulaire du cylindre possède deux états stables, un état détendu dans lequel il contient du lubrifiant et un état écrasé dans lequel sa hauteur est négligeable et dans lequel il ne contient qu'une quantité résiduelle de lubrifiant.

De préférence, lors de son écrasement, un anneau possède un maximum de résistance à l'écrasement au-delà duquel il tend à prendre son état écrasé.

Dans un mode de réalisation de l'invention, la résistance à l'écrasement de la cartouche est constante ou dégressive au cours de son écrasement.

Dans un mode de réalisation de l'invention, le passage d'un anneau à l'état écrasé facilite l'écrasement des anneaux adjacents en entraînant une déformation de la paroi desdits anneaux adjacents en raison de la rigidité de la paroi de la cartouche. On obtient ainsi une cartouche dont la raideur dégressive compense la variation de tension du ressort au cours de son allongement.

Grâce à l'invention, on obtient un distributeur de graisse automatique qui exerce sur la réserve de lubrifiant, une pression sensiblement constante.

L'invention sera mieux comprise à l'étude de la description détaillée d'un mode de réalisation pris à titre nullement limitatif et illustré par les dessins annexés, sur lesquels :
la figure 1 est une vue en perspective et en coupe d'un distributeur de graisse automatique muni d'une cartouche de graisse neuve;
la figure 2 est une vue similaire à la figure 1, montrant un distributeur de graisse automatique muni d'une cartouche vidée de sa graisse; et

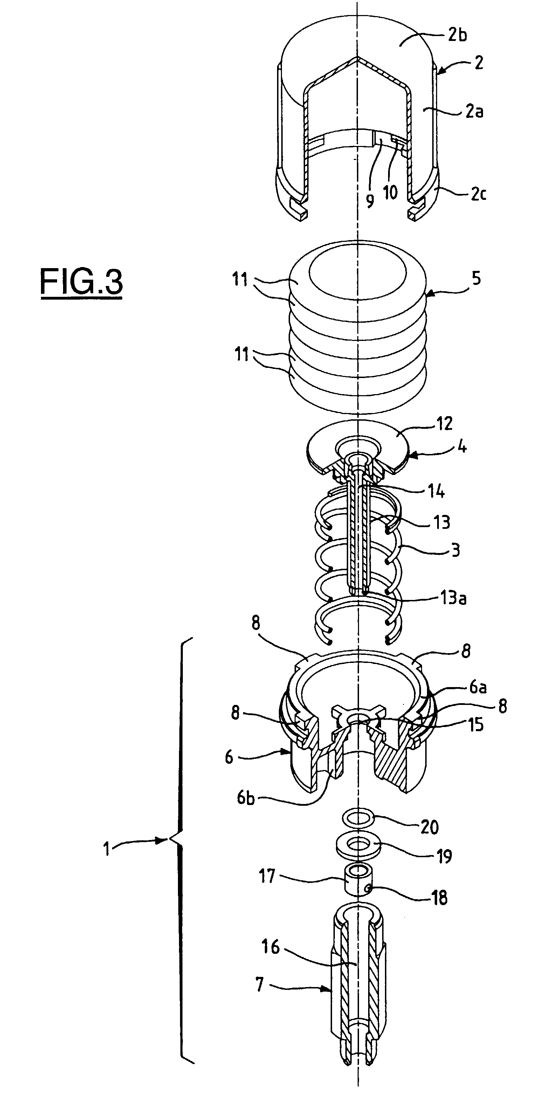

la figure 3 est une vue en éclaté du distributeur de graisse automatique.

Tel qu'illustré sur les figures, le distributeur de graisse comprend une embase 1 sur laquelle vient se fixer un couvercle creux 2. Entre l'embase 1 et le couvercle 2 sont disposés un ressort de compression 3, un piston 4 et une cartouche de graisse 5. L'embase 1 comprend un corps 6 sous lequel vient se fixer une pièce d'adaptation 7.

Le corps 6 de l'embase 1 est sensiblement circulaire et comprend sur sa partie supérieure 6a des ergots 8 faisant saillie radialement vers l'extérieur pour retenir le couvercle 2. Le couvercle 2 comprend une partie cylindrique 2a dont l'extrémité supérieure est fermée par une partie de sommet 2b. L'extrémité inférieure 2c de la partie cylindrique 2a du couvercle 2 comprend sur sa face interne des creux 9 dans lesquels les ergots 8 du corps 6 peuvent venir se loger pour assurer la solidarisation axiale de l'embase 1 et du couvercle 2. Les creux 9 débouchent à travers l'épaisseur de l'extrémité inférieure 2c de la paroi cylindrique 2a du couvercle 2 en formant des fenêtres 10 en face desquelles les ergots 8 sont disposés lorsque l'embase 1 et le couvercle 2 sont verrouillés ensemble. Ainsi, un opérateur peut vérifier visuellement le bon verrouillage de l'embase 1 et du couvercle 2.

La cartouche de graisse 5 est sensiblement cylindrique et sa paroi est formée d'une pluralité d'anneaux 11. La cartouche de graisse 5 est disposée entre le sommet 2b du couvercle 2 et le piston 4. L,e piston 4 comprend une tête d'obturation 12 de diamètre adapté à la paroi de la partie cylindrique 2a du couvercle 2, et une tige-guide 13 faisant saillie sous la tête 12. La tête d'obturation 12 et la tige-guide 13 sont traversées par un conduit 14 d'écoulement de la graisse.

Entre la tête d'obturation 12 et le corps 6 de l'embase 1 et coaxialement à la tige-guide 13, est disposé le ressort 3 qui exerce une force tendant à repousser le piston 4 vers le sommet 2b du couvercle 2. Le corps 6 de l'embase 1 est percé d'un trou traversant 15 dans lequel vient coulisser la tige-guide 13 du piston 4.

Sur la partie inférieure 6b du corps 6 de l'embase 1, la pièce d'adaptation 7 vient s'emmancher dans le trou traversant 15. Le trou traversant 15 est de diamètre plus grand du côté de la partie inférieure 6b que du côté de la partie supérieure 6a du corps 6 de l'embase 1. La pièce d'adaptation 7 est traversée par un conduit d'écoulement 16 dans lequel fait saillie la tige-guide 13 du piston 4. Une pièce de réglage 17 est disposée dans le conduit 16 de la pièce d'adaptation 7 et est fixée à l'extrémité inférieure 13a de la tige-guide 13 du piston 4. La pièce de réglage 17 est percée d'un trou 18 d'écoulement de la graisse. Une rondelle 19 et un joint annulaire d'étanchéité 20 sont fixés entre la pièce d'adaptation 7 et le corps 6 pour éviter d'éventuelles fuites de graisse. La tige-guide 13 du piston 4 peut coulisser en frottant sur le joint d'étanchéité 20.

Lorsque l'on veut installer un dispositif de graissage automatique en un point d'un appareil, on détermine tout d'abord le débit de graisse nécessaire à la lubrification de ce point. On en déduit le diamètre du trou 18 de la pièce de réglage 17 devant être utilisée. On monte l'ensemble du dispositif de graissage avec la pièce de réglage 17 sélectionnée. Puis on vient fixer l'embase 1 du dispositif de graissage sur le point à lubrifier, la pièce d'adaptation 7 étant prévue pour être fixée dans les filetages standardisés des points de lubrification. L'appareil de graissage étant ainsi fixé, on enlève le couvercle 2 en le tournant légèrement puis en le tirant de façon à dégager les ergots 8 des creux 9. Le couvercle 2 étant enlevé, le piston 4 soumis à la force du ressort 3 reste assujetti à la pièce de réglage 17 qui est de diamètre supérieur à celui du trou 15 du côté de la partie supérieure 6a du corps 6 de l'embase 1. Le piston 4 ne peut donc se séparer totalement de l'embase 1. On vient alors disposer une cartouche de graisse 5 sur le piston 4, puis on dispose le couvercle 2 sur la cartouche 5 en comprimant le ressort 3 jusqu'au verrouillage du couvercle 2 sur l'embase 1.

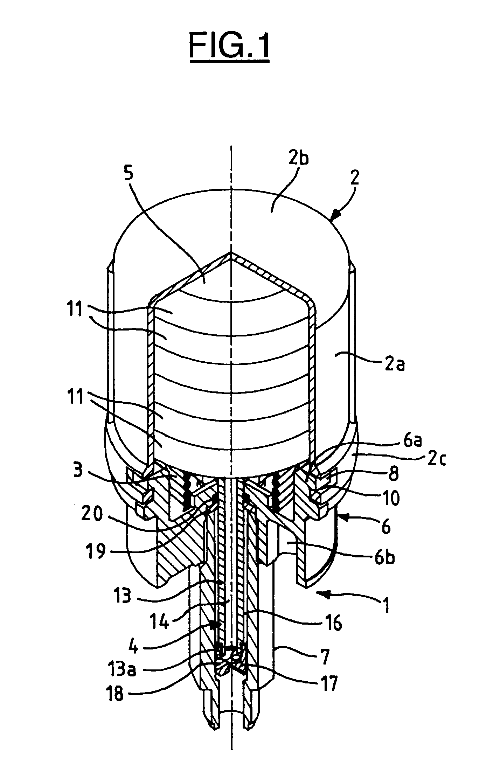

On obtient ainsi un dispositif de graissage tel que représenté à la figure 1, avec une cartouche 5 neuve et remplie de graisse, un ressort 3 en position comprimée, la tige-guide 13 du piston 4 faisant largement saillie dans le conduit 16 de la pièce d'adaptation 17 et assurant le guidage de la tête d'obturation 12 du piston 4 tout au long de sa remontée sous l'action du ressort 3.

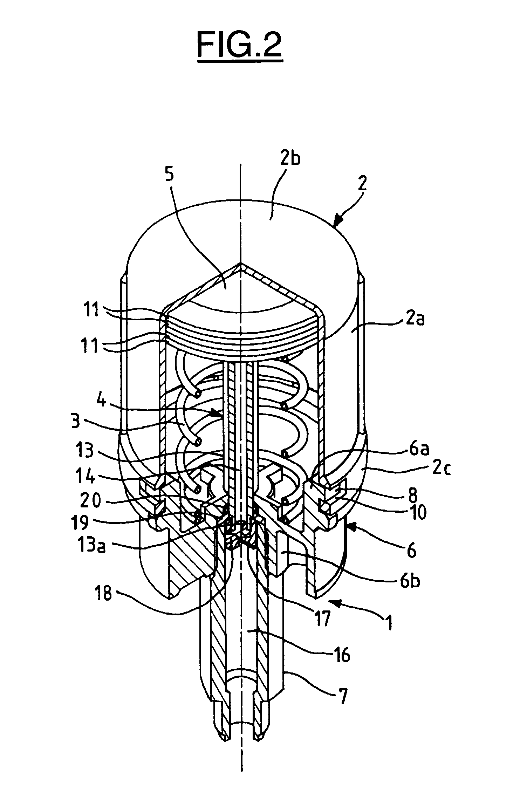

La figure 2 illustre un dispositif de graissage dont la cartouche 5 est quasiment vidée de sa graisse qui s'est écoulée à travers le conduit 14 du piston 4, et le conduit 16 de la pièce d'adaptation 7. La hauteur de la cartouche 5 est très faible, celle-ci ne contenant quasiment plus de graisse. La tige-guide 13 du piston 4 fait largement saillie au-dessus de la partie supérieure 6a du corps 6 de l'embase 1. La pièce de réglage 17 est toujours fixée à l'extrémité inférieure 13a de la tige-guide 13 et se trouve à proximité immédiate du trou 15 du corps 6 de l'embase 1. La rondelle 19 et le joint d'étanchéité 20 empêchent toute remontée de graisse entre la tige-guide 13 et le trou 15 du corps 6 de l'embase 1, qui pourrait venir à proximité du ressort 3.

La cartouche 5 est formée d'une pluralité d'anneaux 11 qui forment le contenant de la graisse. La paroi de la cartouche 5 est réalisée en matériau synthétique relativement rigide. Au début de l'écrasement d'un anneau 11, celui-ci oppose une résistance à l'écrasement qui va croissant jusqu'à un maximum où l'anneau tend à prendre une position écrasée, plate, où son volume intérieur devient négligeable et où il ne contient par conséquent, quasiment plus de graisse. Ainsi, au cours de l'écrasement de la cartouche 5, tous les anneaux 11 prennent successivement leur position écrasée. En raison de la rigidité de la paroi de la cartouche 5, lorsqu'un anneau 11 prend sa position écrasée, les anneaux adjacents subissent une déformation à proximité de l'anneau 11 qui diminue leur résistance à l'écrasement et facilite par conséquent l'écrasement de l'ensemble de la cartouche 5. On obtient ainsi, une cartouche 5 dont la résistance à l'écrasement peut être sensiblement constante ou dégressive au cours de la détente du ressort 3. Comme le ressort 3 en se détendant exerce une force décroissante sur le piston 4 et la cartouche de graisse 5, il est avantageux de prévoir une cartouche 5 dont la résistance à l'écrasement soit décroissante de façon à compenser la diminution de la force exercée par le ressort 3. On peut obtenir, grâce à une telle cartouche 5, un dispositif de graissage dont le débit soit constant dans le temps.

Grâce à l'invention, on réalise un dispositif de graissage économique, compact, et dont la recharge en lubrifiant peut être effectuée facilement sans perte de lubrifiant, tout en permettant un débit régulier de lubrifiant dans l'organe mécanique destiné à le recevoir.

## Revendications

1. Dispositif de lubrification automatique comprenant une embase (1) traversée par un conduit d'écoulement du lubrifiant, capable de recevoir un couvercle (2) creux formant un cylindre dans lequel sont logés une cartouche (5) de lubrifiant et un piston (4) mobile sous l'action d'un ressort (3), caractérisé par le fait que le ressort (3) est disposé entre le piston et l'embase pour repousser le piston vers le couvercle, la cartouche (5) de lubrifiant étant disposée entre le piston et le couvercle de façon à être écrasée progressivement par le piston et que le conduit (16) de l'embase reçoit une pièce de réglage (17) de l'écoulement munie d'un trou (18) dont le diamètre définit la vitesse d'écoulement du lubrifiant.

2. Dispositif selon la revendication 1, caractérisé par le fait que le piston (4) comprend une tête (12), une tige-guide (13) faisant saillie dans le conduit de l'embase, et un conduit (14) traversant la tête et la tige-guide du piston de façon que le lubrifiant provenant de la cartouche s'écoule vers le conduit de l'embase.

3. Dispositif selon la revendication 2, caractérisé par le fait qu'il comprend un moyen de réglage de l'écoulement du fluide solidaire de l'extrémité inférieure (13a) de la tige-guide (13) du piston (4).

4. Dispositif selon la revendication 3, caractérisé par le fait que le trou (18) de la pièce de réglage met en communication le conduit (14) du piston et le conduit (16) de l'embase.

5. Dispositif selon la revendication 3 ou 4, caractérisé par le fait que l'embase comprend un corps (6) recevant le couvercle et le ressort et à travers lequel coulisse la tige-guide du piston, et une pièce d'adaptation (7) fixée sous le corps, dans laquelle est disposé le moyen de réglage de l'écoulement et qui est capable de s'adapter à un organe mécanique auquel le lubrifiant est destiné.

6. Cartouche de lubrifiant destinée à être disposée dans un dispositif de lubrification automatique du type comprenant une embase (1) traversée par un conduit d'écoulement de lubrifiant et capable de recevoir un couvercle (2) creux formant un cylindre dans lequel est logé un piston (4) mobile sous l'action d'un ressort (3), la cartouche comprenant un contenant de forme cylindrique avec des parois réalisées en matériau synthétique, la paroi circulaire du cylindre étant annelée, caractérisée par le fait que chaque anneau (11) formé sur la paroi circulaire du cylindre possède deux états stables, un état détendu dans lequel il contient du lubrifiant et un état écrasé dans lequel sa hauteur est négligeable et dans lequel il ne contient qu'une quantité résiduelle de lubrifiant de façon à faciliter l'écrasement de la cartouche.

7. Cartouche selon la revendication 6, caractérisée par le fait que, lors de son écrasement, un anneau (11) possède un maximum de résistance à l'écrasement au-delà duquel il tend à prendre son état écrasé.

8. Cartouche selon la revendication 6 ou 7, caractérisée par le fait que la résistance à l'écrasement de la cartouche est constante ou dégressive au cours de son écrasement.

9. Cartouche selon l'une quelconque des revendications 6 à 8, caractérisée par le fait que le passage d'un anneau (11) à l'état écrasé facilite l'écrasement des anneaux adjacents en entraînant une déformation de la paroi desdits anneaux adjacents en raison de la rigidité de la paroi de la cartouche.
